# EUROPÄISCHE PATENTSCHRIFT

(11) **EP 3 323 794 B1**
(45) Veröffentlichungstag und Bekanntmachung des Hinweises auf die Patenterteilung: **29.12.2021**
(21) Anmeldenummer: 16199243.3
(22) Anmeldetag: 17.11.2016
(51) Int. Cl.: C04B 35/04, C04B 35/547, C04B 35/622, C04B 35/64

(54) **FEUERFESTES KERAMISCHES ERZEUGNIS, VERSATZ ZUR HERSTELLUNG EINES SOLCHEN ERZEUGNISSES SOWIE VERFAHREN ZUR HERSTELLUNG EINES SOLCHEN ERZEUGNISSES**
FIRE-PROOF CERAMIC PRODUCT, OFFSET FOR PRODUCING SUCH A PRODUCT AND METHOD FOR PRODUCING SUCH A PRODUCT
PRODUIT EN CÉRAMIQUE IGNIFUGE, MÉLANGE DE FABRICATION D'UN TEL PRODUIT ET PROCÉDÉ DE FABRICATION D'UN TEL PRODUIT

(43) Veröffentlichungstag der Anmeldung: 23.05.2018
(73) Patentinhaber: Refractory Intellectual Property GmbH & Co. KG, 1100 Wien (AT)
(72) Erfinder: Klitzsch, Michael, 8700 Leoben (AT); Geith, Martin, 8700 Leoben (AT); Kahr, Friedrich, 8663 Veitsch (AT); Königshofer, Sandra, 8605 St. Lorenzen (AT)
(74) Vertreter: Berkenbrink, Kai-Oliver

(56) Entgegenhaltungen:
- EP-A1- 2 995 596
- WO-A1-2008/091041
- CA-A- 686 668
- DE-A1- 1 927 750
- DE-B1- 1 571 601
- US-A- 3 288 617
- US-A- 3 879 208
- SIADATI S M ET AL: "Acidic and basic binders for magnesite based aggregate in plaster of tundish", CERAMICS INTERNATIONAL, ELSEVIER, AMSTERDAM, NL, Bd. 5, Nr. 7, 1. September 2009 (2009-09-01), Seiten 2845-2852, XP026282606, ISSN: 0272-8842, DOI: 10.1016/J.CERAMINT.2009.03.031 [gefunden am 2009-04-15]

## Beschreibung

Die Erfindung betrifft ein feuerfestes keramisches Erzeugnis, einen Versatz zur Herstellung eines solchen Erzeugnisses sowie ein Verfahren zur Herstellung eines solchen Erzeugnisses.

Der Begriff "feuerfestes keramisches Erzeugnis" im Sinne der Erfindung bezeichnet insbesondere feuerfeste Erzeugnisse mit einer Einsatztemperatur von über 600°C und bevorzugt feuerfeste Werkstoffe gemäß DIN 51060: 2000-6, also Werkstoffe mit einem Kegelfallpunkt größer SK 17. Die Ermittlung des Kegelfallpunktes kann insbesondere gemäß DIN EN 993-12: 1997-06 erfolgen.

Mit einem "feuerfesten keramischen Versatz" wird bekanntermaßen eine Zusammensetzung aus einer oder mehreren Komponenten beziehungsweise Rohstoffen bezeichnet, durch die mittels einer Temperaturbehandlung, also insbesondere mittels eines keramischen Brandes, ein feuerfestes keramisches Erzeugnis herstellbar ist.

Die vorliegende Erfindung betrifft ein basisches feuerfestes keramisches Erzeugnis, konkret ein basisches feuerfestes keramisches Erzeugnis auf Basis MgO (Magnesiumoxid, mineralogisch "Periklas").

Solch basische feuerfeste keramische Erzeugnisse auf Basis MgO haben sich grundsätzlich als feuerfeste keramische Erzeugnisse für Hochtemperaturanwendungen bewährt. Insbesondere werden solche MgO-Erzeugnisse zur feuerfesten Zustellung von Aggregaten in der Metallindustrie, beispielsweise in Stranggussanlagen, sowie in Glasschmelzöfen oder in Brennöfen der Nichtmetallindustrie, beispielsweise in Tunnel- oder Drehrohröfen, zur feuerfesten Zustellung verwendet.

Während sich solche Erzeugnisse auf Basis MgO bei der Hochtemperaturanwendung als hoch feuerfest erweisen, kann es bei der Lagerung und dem Transport solcher Erzeugnisse zu einer Schädigung derselben kommen. Denn das MgO in solchen Erzeugnissen neigt zur Hydratation und kann mit Feuchtigkeit zu Magnesiumhydroxid, Mg(OH)₂, reagieren, wodurch solche Erzeugnisse rissig werden und bei längerer Feuchtigkeitseinwirkung auch zerfallen können.

Es ist daher bekannt, feuerfeste keramische Erzeugnisse auf Basis MgO gegen eine solche Hydratation zu schützen, beispielsweise durch eine Imprägnierung der Erzeugnisse mit Bitumen oder Paraffin. Eine solche Imprägnierung ist jedoch zum einen mit erheblichen Kosten verbunden und führt zum anderen zu einer Verflüchtigung von Bestandteilen der Imprägnierung beim Aufheizen der imprägnierten Erzeugnisse bei deren Anwendung, was mit einer erheblichen Rauchentwicklung und Geruchsbelästigung verbunden und daher in der Regel unerwünscht ist.

Ein dauerhafter Schutz der Erzeugnisse vor Hydratation kann hierdurch jedoch nicht gewährleistet werden, da eine solche Imprägnierung die Erzeugnisse nur oberflächlich schützt. Durch in das Volumen des Erzeugnisses eindringende Feuchtigkeit kann es daher weiterhin zu einer Hydratation der Magnesia im Erzeugnis kommen.

Ferner können die feuerfesten Eigenschaften des Erzeugnisses durch die Imprägnierung verändert, insbesondere auch dessen Feuerbeständigkeit verschlechtert werden.

In SIDATI S M ET AL "Acidic and basic binders for magnesite based aggregate in plaster of tundish", CERAMICS INTERNATIONAL, Elsevier, Amsterdam, NL, Bd. 5, Nr. 7, 1. September 2009 (2009-09-01), Seiten 2845-2852, ISSN: 0272-8842, DOI: 10.1016/J.CERAMINT.2009.03.031 wird der Einfluss verschiedener Binder auf ein feuerfestes Erzeugnis untersucht, das aus einem Versatz aus 96 % Sintermagnesia und 4 % Binder und einem Brand bei 1.400°C hergestellt worden ist, wobei als Binder unter anderem auch Natriumsulfat und Kaliumsulfat eingesetzt werden.

US 3,288,617 A beschreibt die Herstellung eines Steines auf Basis eines kalzinierten Produktes, wobei das kalzinierte Produkt gemahlen und mit Wasser, welches einen Binder, wie beispielsweise Schwefelsäure, enthält, befeuchtet und dann zu Steinen geformt wird und wobei das kalzinierte Produkt eine chemische Zusammensetzung aufweisen kann, mit unter anderem einem Anteil an MgO von 80,0 bis 88,0 % und SiO₂ von 0,5 bis 2,0 %.

Der vorliegenden Erfindung liegt die Aufgabe zu Grunde, ein feuerfestes keramisches Erzeugnis auf Basis MgO anzubieten, das gegen Hydratation geschützt ist. Eine weitere Aufgabe der Erfindung besteht darin, ein solch feuerfestes keramisches Erzeugnis auf Basis MgO zur Verfügung zu stellen, dass gegen Hydratation geschützt ist und gleichzeitig gegenüber einem vor Hydratation nicht geschützten Erzeugnis keine verschlechterten Eigenschaften aufweist, insbesondere keine verschlechterten Feuerfesteigenschaften. Insbesondere liegt der Erfindung auch die Aufgabe zugrunde, ein solches Erzeugnis zur Verfügung zu stellen, bei dessen Aufheizen es zu keiner Rauchentwicklung und Geruchsbelästigung kommt. Eine weitere Aufgabe besteht darin, einen Versatz zur Herstellung eines solchen Erzeugnisses zur Verfügung zu stellen. Schließlich besteht eine Aufgabe der Erfindung darin, ein Verfahren zur Herstellung eines solchen Erzeugnisses zur Verfügung zu stellen.

Erfindungsgemäß wird zur Lösung der Aufgabe zur Verfügung gestellt ein feuerfestes keramisches Erzeugnis, umfassend die folgenden Merkmale:
Das Erzeugnis weist eine keramische Bindung auf;
das Erzeugnis weist einen Anteil an MgO von wenigstens 75 Masse-% auf;
das Erzeugnis weist einen Anteil an Schwefel im Bereich von 0,01 bis 0,20 Masse-% auf; sowie
die weiteren Merkmale nach Anspruch 1.

Die vorgemachten Angaben in Masse-% geben jeweils den Anteil der betreffenden Komponente in Masse-%, bezogen auf die Gesamtmasse des Erzeugnisses an.

Die Erfindung beruht auf der überraschenden Grunderkenntnis, dass feuerfeste, keramische Erzeugnisse auf Basis MgO wirksam gegen eine Hydratation des MgO im Erzeugnis geschützt sind, soweit der Gehalt an Gesamtschwefel im Erzeugnis in einem sehr spezifischen Massenanteil vorliegt. Erfindungsgemäß hat sich herausgestellt, dass dieser spezifische Massenanteil an Gesamtschwefel im Erzeugnis im Bereich von 0,01 bis 0,20 Masse-% liegt. Erfindungsgemäß hat sich herausgestellt, dass der Schwefel die Hydratation des MgO im Erzeugnis nicht unterdrücken kann, soweit Schwefel unterhalb eines Anteils von 0,01 Masse-% im Erzeugnis vorliegt. Ferner hat sich herausgestellt, dass die feuerfesten Eigenschaften des Erzeugnisses verschlechtert werden können, wenn der Anteil an Schwefel im Erzeugnis über 0,20 Masse-% liegt. Beispielsweise kann Schwefel mit weiteren Bestandteilen des Erzeugnisses bei der Anwendung desselben niedrig schmelzende Phasen bilden, die die Temperaturbeständigkeit, insbesondere seine Heißfestigkeit, erheblich mindern können, soweit Schwefel in einem Anteil über 0,20 Masse-% im Erzeugnis vorliegt.

Erfindungsgemäß hat sich herausgestellt, dass der Hydratationsschutz durch Schwefel noch weiter verbessert und ein etwaig nachteiliger Einfluss des Schwefels auf das Erzeugnis noch besser verhindert werden kann, soweit der Anteil an Schwefel im Erzeugnis einem noch spezifischeren Bereich von 0,01 bis 0,05 Masse-% angenähert ist. Insoweit kann beispielsweise auch vorgesehen sein, dass Schwefel in einem Anteil von höchstens 0,20 Masse-%, 0,15 Masse-%, 0,10 Masse-% oder 0,05 Masse-% im Erzeugnis vorliegt. Insoweit kann bevorzugt beispielsweise vorgesehen sein, dass das Erzeugnis einen Anteil an Schwefel im Bereich von 0,01 bis 0,15 Masse-%, weiter bevorzugt im Bereich von 0,01 bis 0,10 Masse-% und besonders bevorzugt im Bereich von 0,01 bis 0,05 Masse-% aufweist.

Die vorgemachten Angaben zum Anteil an Schwefel im Erzeugnis sind jeweils bezogen auf die Gesamtmasse des Erzeugnisses.

Die hierin gemachten Angaben zum Anteil an Schwefel im erfindungsgemäßen Erzeugnis oder Versatz sind jeweils die Gehalte an Gesamtschwefel im Erzeugnis oder Versatz, die bestimmt sind nach Verfahren B (IR-Detektion nach Verbrennung) gemäß DIN 51085: 2015-01. Dieses Bestimmungsverfahren beruht auf der Umsetzung des zu analysierenden Materials mit Sauerstoff in einem induktiv beheizten Tiegel und anschließender Infrarot-Detektion der SO₂-Konzentration im Trägergasvolumen. Der Gehalt an Schwefel wird, ebenso wie im Rahmen der Erfindung in Bezug auf das erfindungsgemäße Erzeugnis und den erfindungsgemäßen Versatz, als elementarer Schwefel (S) angegeben.

Ferner ist insoweit Schwefel im Sinne der Erfindung nicht zwangsläufig freier Schwefel, sondern beispielsweise auch Schwefel in gebundener Form.

Erfindungsgemäß ist vorgesehen, dass der Schwefel über das Volumen des Erzeugnisses verteilt in diesem vorliegt, insbesondere über das gesamte Volumen des Erzeugnisses verteilt vorliegt. Hierdurch ist sichergestellt, dass das Erzeugnis über das gesamte Volumen wirksam gegen Hydratation des MgO geschützt ist. Um eine solche Verteilung des Schwefels über das Volumen des Erzeugnisses erreichen zu können, ist vorgesehen, dass bei der Herstellung des Erzeugnisses eine Schwefel umfassende Komponente in den Versatz eingebracht und mit den weiteren Komponenten beziehungsweise Rohstoffen des Versatzes gemischt wird, so dass der Schwefel über das Volumen des Versatzes und das aus diesem hergestellte feuerfeste keramische Erzeugnis verteilt ist.

Es kann vorgesehen sein, dass der Schwefel nicht homogen über das Volumen des Erzeugnisses verteilt in diesem vorliegt. Insbesondere kann hinsichtlich des Anteils an Schwefel ein Gradient im Erzeugnis vorliegen. Beispielsweise kann der Anteil an Schwefel von den Randbereichen des Erzeugnisses, beispielsweise von den Außenflächen des Erzeugnisses, zum inneren Bereich des Erzeugnisses hin zunehmen. Dies kann beispielsweise dadurch bedingt sein, dass sich während des keramischen Brandes des Erzeugnisses Schwefelanteile der Schwefel umfassenden Komponente des Versatzes, aus dem das Erzeugnis erstellt ist, in den Randbereichen stärker verflüchtigt haben als im inneren Bereich des Erzeugnisses. Die erfindungsgemäßen Anteile an Schwefel im erfindungsgemäßen Erzeugnis stellen daher Mittelwerte dar, wobei bevorzugt vorgesehen ist, dass keine Bereiche, insbesondere keine makroskopischen Bereiche im erfindungsgemäßen Erzeugnis vorliegen, in denen der Anteil an Schwefel außerhalb, insbesondere nicht wesentlich außerhalb der erfindungsgemäßen Anteile liegt.

Da eine Imprägnierung des Erzeugnisses zum Schutz vor einer Hydratation des MgO im Erzeugnis nicht notwendig ist, kommt es bei der Anwendung des Erzeugnisses zu keiner Rauchentwicklung oder Geruchsbelästigung durch eine Verflüchtigung einer solchen Imprägnierung.

Das erfindungsgemäße Erzeugnis weist einen Anteil an MgO von wenigstens 75 Masse-% auf, also beispielsweise auch einen Anteil an MgO von wenigstens 80 Masse-%. Ferner kann das Erzeugnis beispielsweise einen Anteil an MgO von höchstens 97 Masse-% aufweisen, also beispielsweise auch von höchstens 95 oder 92 Masse-%. Insoweit kann das Erzeugnis beispielsweise einen Anteil an MgO im Bereich von 75 bis 97 Masse-% aufweisen, also beispielsweise auch im Bereich von 80 bis 95 Masse-% oder im Bereich von 80 bis 92 Masse-%.

Die vorgemachten Angaben zum Massenanteil von MgO im Erzeugnis sind jeweils bezogen auf die Gesamtmasse des Erzeugnisses.

Soweit hierin Angaben zu Anteilen an Oxiden im Erzeugnis gemacht werden, insbesondere Angaben zu den Anteilen der Oxide MgO, Al₂O₃, CaO, SiO₂, Fe₂O₃, K₂O oder Na₂O, müssen diese Oxide nicht in reiner Form im Erzeugnis vorliegen. Vielmehr können diese Oxide in reiner Form und/oder in gebundener Form im Erzeugnis vorliegen. Beispielsweise kann MgO im Erzeugnis als reines MgO (Periklas) und/oder als Magnesiaspinell (MgO • Al₂O₃) vorliegen. Ferner kann beispielsweise das Oxid Al₂O₃ in Erzeugnis als reines Al₂O₃ (Korund) oder als Magnesiaspinell vorliegen.

Bei dem erfindungsgemäßen feuerfesten Erzeugnis handelt es sich um ein keramisches Erzeugnis, also ein Erzeugnis, das eine keramische Bindung aufweist. Eine solch keramische Verbindung wird bekanntermaßen durch Sintern beim Brand des Erzeugnisses hergestellt. Bei dem erfindungsgemäßen Erzeugnis handelt es sich damit um ein keramisches, also gesintertes feuerfestes Erzeugnis.

Das Erzeugnis kann einen Anteil an Al₂O₃ im Bereich von 1 bis 20 Masse-% aufweisen. Insoweit kann das Erzeugnis beispielsweise einen Anteil an Al₂O₃ von wenigstens 1, 2, 3, 4 oder 5 Masse-% aufweisen. Ferner kann das Erzeugnis beispielsweise einen Anteil an Al₂O₃ von höchstens 20, 19, 18, 17 oder 16 Masse-% aufweisen. Insoweit kann das Erzeugnis beispielsweise auch einen Anteil an Al₂O₃ im Bereich von 3 bis 18 Masse-% oder im Bereich von 5 bis 16 Masse-% aufweisen.

Das Erzeugnis kann einen Anteil an CaO im Bereich von 0,5 bis 3,0 Masse-% aufweisen, also beispielsweise auch einen Anteil an CaO von wenigstens 0,6 oder 0,7 Masse-% und beispielsweise auch einen Anteil an CaO von höchstens 3,0 Masse-%, 2,9 Masse-%, 2,8 Masse-%, 2,7 Masse-%, 2,6 Masse-% oder 2,5 Masse-%. Insoweit kann das Erzeugnis beispielsweise auch einen Anteil an CaO im Bereich von 0,6 bis 2,8 Masse-% oder im Bereich von 0,7 bis 2,5 Masse-% aufweisen.

Das Erzeugnis weist einen Anteil an SiO₂ unter 1,5 Masse-% auf, also beispielsweise auch unter 1,0 Masse-%. Insoweit kann das Erzeugnis beispielsweise einen Anteil an SiO₂ im Bereich von 0,1 bis 1,5 Masse-% oder im Bereich von 0,3 bis 1,5 Masse-% aufweisen.

Das Erzeugnis kann einen Anteil an Fe₂O₃ unter 10 Masse-% aufweisen, also beispielsweise auch einen Anteil an Fe₂O₃ unter 5 oder unter 3 Masse-%. Insoweit kann das Erzeugnis beispielsweise einen Anteil an Fe₂O₃ im Bereich von 0,1 bis 10 Masse-%, im Bereich von 0,1 bis 5 Masse-% oder im Bereich von 0,1 bis 3 Masse-% aufweisen.

Das Erzeugnis kann einen Anteil an Na₂O unter 0,5 Masse-% aufweisen, also beispielsweise auch einen Anteil an Na₂O unter 0,1 oder unter 0,05 Masse-%. Beispielsweise kann das Erzeugnis einen Anteil an Na₂O im Bereich von 0,01 bis 0,5 Masse-% oder im Bereich von 0,01 bis 0,1 Masse-% aufweisen.

Das Erzeugnis kann einen Anteil an K₂O unter 0,2 Masse-% aufweisen, also beispielsweise auch einen Anteil an K₂O unter 0,1 Masse-%. Beispielsweise kann das Erzeugnis einen Anteil an K₂O im Bereich von 0,01 bis 0,1 Masse-% aufweisen.

Das Erzeugnis kann einen Anteil an der Gesamtmasse an Na₂O und K₂O unter 0,5 Masse-% aufweisen, also beispielsweise auch einen Anteil unter 0,2 oder 0,1 Masse-%. Beispielsweise kann der Anteil an der Gesamtmasse aus Na₂O und K₂O im Erzeugnis im Bereich von 0,01 bis 0,5 Masse-% liegen.

Die vorgemachten Angaben an Massenanteilen zu MgO, Al₂O₃, CaO, SiO₂, Fe₂O₃, Na₂O und K₂O im Erzeugnis sind jeweils bezogen auf die Gesamtmasse des Erzeugnisses.

Neben den vorbezeichneten Stoffen, also MgO, Al₂O₃,CaO, SiO₂, Fe₂O₃, Na₂O, K₂O und Schwefel, kann das erfindungsgemäße Erzeugnis weitere Stoffe beispielsweise in einem Anteil unter 5 Masse-% aufweisen, also beispielsweise auch in einem Anteil unter 4, 3, 2 oder unter 1 Masse-%, jeweils bezogen auf die Gesamtmasse des Erzeugnisses.

Nach einer Ausführungsform ist vorgesehen, dass der Anteil an Cr₂O₃ im Erzeugnis unter 5 Masse-% liegt, also beispielsweise auch unter 4, 3, 2 oder 1 Masse-%, jeweils bezogen auf die Gesamtmasse des Erzeugnisses.

Nach einer Ausführungsform ist vorgesehen, dass der Anteil an freiem Kohlenstoff im Erzeugnis unter 3 Masse-% liegt, also beispielsweise auch unter 2 oder unter 1 Masse-%, jeweils bezogen auf die Gesamtmasse des Erzeugnisses.

Gegenstand der Erfindung ist auch ein Versatz zur Herstellung eines erfindungsgemäßen Erzeugnisses, umfassend die folgenden Merkmale:
Eine Grundkomponente umfassend einen oder mehrere Rohstoffe auf Basis Magnesia;
eine Schwefel umfassende Komponente umfassend einen oder mehrere Schwefel umfassende Rohstoffe;
der Versatz weist einen Anteil an MgO von wenigstens 75 Masse-% auf;
der Versatz weist einen solchen Anteil an Schwefel auf, dass ein aus dem Versatz brennbares feuerfestes keramisches Erzeugnis einen Anteil an Schwefel gemäß dem erfindungsgemäßen feuerfesten keramischen Erzeugnis aufweist.

Die Grundkomponente des Versatzes kann einen oder mehrere der folgenden Rohstoffe auf Basis von Magnesia umfassen: Sintermagnesia, Schmelzmagnesia, Sinterdoloma oder Schmelzdoloma. Bevorzugt umfasst die Grundkomponente einen Rohstoff auf Basis Magnesia in Form von Sintermagnesia.

Neben Rohstoffen auf Basis Magnesia kann die Grundkomponente einen oder mehrere weitere Rohstoffe umfassen, insbesondere einen oder mehrere Alumina (Al₂O₃) umfassende Rohstoffe, insbesondere einen oder mehrere der folgenden, Alumina umfassenden Rohstoffe: Magnesiaspinell, Sinterkorund, Schmelzkorund, kalzinierte Tonerde, Galaxit, Herzynit oder Pleonast. Bevorzugt kann die Grundkomponente einen Alumina umfassenden Rohstoff in Form von Magnesiaspinell umfassen.

Bevorzugt umfasst die Grundkomponente wenigstens einen der Rohstoffe Sintermagnesia oder Magnesiaspinell. Besonders bevorzugt besteht die Grundkomponente aus wenigstens einem der Rohstoffe Sintermagnesia oder Magnesiaspinell. Ganz besonders bevorzugt besteht die Grundkomponente aus den Rohstoffen Sintermagnesia und Magnesiaspinell.

Der erfindungsgemäße Versatz kann Anteile an MgO, den weiteren Oxiden Al₂O₃,CaO, SiO₂, Fe₂O₃ und Na₂O und etwaigen weiteren Stoffen entsprechend dem erfindungsgemäßen Erzeugnis aufweisen. Insoweit gelten die zuvor zu den Anteilen dieser Stoffe in dem erfindungsgemäßen Erzeugnis gemachten Ausführungen entsprechend zu den Anteilen dieser Stoffe in dem erfindungsgemäßen Versatz. Der Versatz kann Anteile an K₂O aufweisen, die über den Anteilen an K₂O im Erzeugnis liegen, da sich Anteile an K₂O während des Brandes des Versatzes verflüchtigen können. Insoweit kann vorgesehen sein, dass der Versatz einen Anteil an K₂O unter 2,5 Masse-% aufweist, also beispielsweise auch einen Anteil an K₂O unter 2,0 Masse-%, unter 1,0 Masse-% oder unter 0,4 Masse-%. Beispielsweise kann der Versatz einen Anteil an K₂O im Bereich von 0,01 bis 2,5 Masse-% aufweisen, also beispielsweise auch einen Anteil an K₂O im Bereich von 0,01 bis 1,0 Masse-%.

Die Grundkomponente des Versatzes liegt derart im Versatz vor, beziehungsweise ist derart zusammengestellt, dass der Versatz insgesamt die erfindungsgemäßen Anteile an den vorbezeichneten Oxiden aufweist. Da insbesondere Rohstoffe auf Basis Magnesia und Alumina, insbesondere Sintermagnesia und Magnesiaspinell, neben den Hauptoxiden MgO und Al₂O₃ regelmäßig auch Anteile an einem oder mehreren der Oxide CaO, SiO₂, Fe₂O₃, K₂O und Na₂O aufweisen, ist der Fachmann ohne weiteres in der Lage, die Rohstoffe derart zu einem erfindungsgemäßen Versatz zusammenzustellen, dass dieser insgesamt die erfindungsgemäßen Anteile an diesen Oxiden aufweist. Allerdings weisen Rohstoffe auf Magnesia und Alumina, insbesondere Sintermagnesia und Magnesiaspinell, regelmäßig keine Anteile an Schwefel auf, die es ermöglichen würden, einen Versatz zu konfektionieren, der solche Anteile an Schwefel aufweist, dass hieraus ein feuerfestes keramisches Erzeugnis gebrannt werden könnte, das die erfindungsgemäßen Anteile an Schwefel aufweist. Daher ist erfindungsgemäß vorgesehen, dass der erfindungsgemäße Versatz eine Schwefel umfassende Komponente aufweist, die einen oder mehrere Schwefel umfassende Rohstoffe umfasst. Diese Schwefel umfassende Komponente erlaubt es, solche Anteile an Schwefel im Versatz zu verwirklichen, dass aus dem erfindungsgemäßen Versatz ein feuerfestes keramisches Erzeugnis gebrannt werden kann, das die erfindungsgemäßen Anteile an Schwefel aufweist. Hierzu wird die Schwefel umfassende Komponente - je nach Konzentration des Schwefels in dieser Komponente - in entsprechenden Anteilen in den Versatz eingegeben.

Währen der erfindungsgemäße Versatz zu einem feuerfesten keramischen Erzeugnis gebrannt wird, gehen Anteile des Schwefels im Versatz in die Gasphase über und verflüchtigen sich, so dass diese Anteile anschließend nicht mehr zur Verfügung stehen, um ein gebranntes feuerfestes keramisches Erzeugnis mit den erfindungsgemäßen Anteilen an Schwefel zur Verfügung zu stellen. Erfindungsgemäß hat sich herausgestellt, dass bis zu über 80 Masse-%, insbesondere über 90 Masse-%, insbesondere 90 bis 98 Masse-%, bezogen auf die Gesamtmasse an Schwefel im Versatz, des im Versatz vorliegenden Schwefels sich während des Brandes verflüchtigen können. Insoweit ist erfindungsgemäß vorgesehen, dass der Versatz einen solchen Anteil an Schwefel aufweist, dass ein aus dem Versatz brennbares feuerfestes keramisches Erzeugnis einen Anteil an Schwefel wie das hierin offenbarte erfindungsgemäße feuerfeste keramische Erzeugnis aufweist, also in der allgemeinsten Ausführungsform einen Anteil an Schwefel im Bereich von 0,01 bis 0,20 Masse-%. Welche genauen Anteile an Schwefel der Versatz aufweisen muss, um aus diesem ein feuerfestes keramisches Erzeugnis mit einen Anteil an Schwefel, wie es das hierin offenbarte erfindungsgemäße feuerfeste keramische Erzeugnis aufweist, zu brennen, ist durch den Fachmann durch Berechnungen oder experimentell ohne weiteres bestimmbar. Nach einer Ausführungsform ist vorgesehen, dass der Versatz - um einen solchen Anteil an Schwefel im feuerfesten keramischen Erzeugnis zu verwirklichen - einen Anteil an Schwefel im Bereich von 0,02 bis 0,9 Masse-% aufweist, bezogen auf die Gesamtmasse des Versatzes. Besonders vorteilhaft lässt sich aus dem erfindungsgemäßen Versatz ein erfindungsgemäßes Erzeugnis mit den erfindungsgemäßen Anteilen an Schwefel brennen, wenn der Versatz einen Anteil an Schwefel im Bereich von 0,03 bis 0,5 Masse-% aufweist und ganz besonders vorteilhaft, wenn dieser einen Anteil an Schwefel im Bereich von 0,06 bis 0,3 Masse-% aufweist. Insoweit kann beispielsweise auch vorgesehen sein, dass der Versatz einen Anteil an Schwefel von höchstens 0,9 Masse-%, 0,7 Masse-%, 0,5 Masse-%, 0,4 Masse-% oder 0,3 Masse-% und beispielsweise einen Anteil an Schwefel von wenigstens 0,02 Masse-%, 0,03 Masse-%, 0,04 Masse-%, 0,05 Masse-% oder 0,06 Masse-% aufweist.

Nach einer besonders bevorzugten Ausführungsform ist vorgesehen, dass die Schwefel umfassende Komponente wenigstens einen Schwefel umfassenden Rohstoff in Form eines gebrauchten feuerfesten keramischen Erzeugnisses umfasst. Bei einem solchen gebrauchten feuerfesten keramischen Erzeugnis kann es sich insbesondere um einen oder mehrere der folgenden gebrauchten feuerfesten keramischen Erzeugnisse handeln: Eine gebrauchte Ausmauerung eines Zementdrehrohrofens oder eine gebrauchte Ausmauerung eines Regenerators einer Glaswanne.

Bekanntermaßen entstehen während des Brennprozesses in Drehrohröfen zum Brennen von Zementklinker ("Zementdrehrohröfen") oder in Öfen zum Erschmelzen und Behandeln von Glas ("Glaswannen") gasförmige Substanzen, die in die feuerfeste Ausmauerung des Zementdrehrohrofens oder des Regenerators der Glaswanne eindringen und als Schwefel umfassende Substanzen kondensieren, insbesondere als Alkalisulfate, beispielsweise als Kaliumsulfat (K₂SO₄) oder Natriumsulfat (Na₂SO₄). Erfindungsgemäß hat sich nunmehr überraschend herausgestellt, dass eine solch gebrauchte, Schwefel umfassende Ausmauerung als Rohstoff verwendet werden kann, um den Anteil an Schwefel in einem erfindungsgemäßen Versatz zur Herstellung eines erfindungsgemäßen Erzeugnisses einzustellen. Als besonders vorteilhaft hat sich eine feuerfeste Ausmauerung eines Zementdrehrohrofens herausgestellt. Nach einer bevorzugten Ausführungsform umfasst die Schwefel umfassende Komponente daher einen Schwefel umfassenden Rohstoff in Form einer gebrauchten Ausmauerung eines Zementdrehrohrofens. Nach einer Ausführungsform ist vorgesehen, dass die Schwefel umfassende Komponente aus einer gebrauchten Ausmauerung eines Zementdrehrohrofens besteht. Die gebrauchte Ausmauerung eines Zementdrehrohrofens kann insbesondere eine solche auf Basis MgO sein, insbesondere mit einem Anteil an MgO von wenigstens 75 Masse-% oder von wenigstens 80 Masse-%. Ferner kann die gebrauchte Ausmauerung beispielsweise einen Anteil an MgO von höchstens 97 Masse-% aufweisen, also beispielsweise auch von höchstens 95 oder 92 Masse-%. Ferner kann die gebrauchte Ausmauerung beispielsweise einen Anteil an MgO im Bereich von 75 bis 97 Masse-% aufweisen, also beispielsweise auch im Bereich von 80 bis 95 Masse-% oder im Bereich von 80 bis 92 Masse-%. Die vorgemachten Angaben zum Massenanteil an MgO in der gebrauchten Ausmauerung sind jeweils bezogen auf die Masse der Ausmauerung.

Die Grundkomponente kann in dem erfindungsgemäßen Versatz beispielsweise in einem Anteil von wenigstens 50 Masse-% vorliegen, also beispielsweise auch in einem Anteil von wenigstens 60, 70, 80, 90, 95 oder 99 Masse-%. Ferner kann beispielsweise vorgesehen sein, dass die Grundkomponente in einem Anteil von höchstens 99 Masse-% im Versatz vorliegt, also beispielsweise auch Anteil von höchstens 95, 90, 80, 70 oder 60 Masse-%. Insoweit kann die Grundkomponente in dem Versatz beispielsweise in einem Anteil im Bereich von 50 bis 99 Masse% vorliegen, bevorzugt beispielsweise auch in einem Anteil im Bereich von 60 bis 90 Masse-% und besonders bevorzugt in einem Anteil im Bereich von 60 bis 80 Masse-%.

Die Grundkomponente liegt bevorzugt in einer Korngröße von maximal 5 mm im Versatz vor. Beispielsweise kann vorgesehen sein, dass die Grundkomponente zu wenigstens 90 Masse-%, bezogen auf die Gesamtmasse der Grundkomponente, in einer Korngröße von höchstens 5 mm im Versatz vorliegt, bestimmt gemäß DIN EN 933-1:2012-03.

Die Schwefel umfassende Komponente, beispielsweise in Form einer gebrauchten Ausmauerung eines Zementdrehrohrofens, kann beispielsweise in einem Anteil von wenigstens 1 Masse-% im Versatz vorliegen, also beispielsweise auch in einem Anteil von wenigstens 5, 10, 20, 30 oder 40 Masse-%. Ferner kann vorgesehen sein, dass die Schwefel umfassende Komponente in einem Anteil von höchstens 60 Masse-% im Versatz vorliegt, also beispielsweise auch in einem Anteil von höchstens 50 Masse-% oder 40 Masse-%. Insbesondere kann die Schwefel umfassende Komponente in einem Anteil im Bereich von 1 bis 60 Masse-% im Versatz vorliegen, besonders bevorzugt in einem Anteil im Bereich von 10 bis 40 Masse-% und ganz besonders bevorzugt in einem Anteil im Bereich von 20 bis 40 Masse-%.

Die Schwefel umfassende Komponente liegt bevorzugt in einer Korngröße von maximal 5 mm im Versatz vor. Beispielsweise kann vorgesehen sein, dass die Schwefel umfassende Komponente zu wenigstens 90 Masse-%, bezogen auf die Gesamtmasse der Grundkomponente, in einer Korngröße von höchstens 5 mm im Versatz vorliegt, bestimmt gemäß DIN EN 933-1:2012-03.

Neben der Grundkomponente und der Schwefel umfassenden Komponente kann der Versatz noch einen oder mehrere weitere Komponenten aufweisen, bevorzugten in Anteilen unter 10 Masse-%, also beispielsweise auch in einem Anteil unter 5 Masse-% oder unter 1 Masse-%.

Die zuvor gemachten Angaben zum Versatz, insbesondere auch die Angaben zu Anteilen an Schwefel im Versatz, beziehen sich auf den Versatz ohne etwaige Binder, die dem Versatz zugegeben werden können. Bevorzugt kann vorgesehen sein, dem Versatz wenigstes einen üblichen Binder zuzugeben, um die Bearbeitbarkeit des Versatzes zu verbessern oder einem aus dem Versatz geformten Grünkörper eine ausreichende Grünfestigkeit zu verleihen. Insoweit kann dem Versatz beispielsweise ein üblicher temporärer Binder zugegeben werden, beispielsweise Ligninsulfonat, beispielsweise in Anteilen bis zu 5 Masse-%, insbesondere in Anteilen im Bereich von 1 bis 5 Masse-%, jeweils bezogen auf die Gesamtmasse des Versatzes ohne den Binder. Soweit solche Binder, wie beispielsweise auch Ligninsulfonat, Anteile an Schwefel aufweisen, sind diese für die Herstellung des erfindungsgemäßen Erzeugnisses ohne Bedeutung, da sich erfindungsgemäß herausgestellt hat, dass sich solche Anteile an Schwefel in Bindern beim Brennen des Erzeugnisses zu einem gesinterten feuerfesten keramischen Erzeugnis praktisch vollständig verflüchtigen. Insoweit hat sich herausgestellt, dass etwaige Anteile an Schwefel, die solche Binder in dem gebrannten Erzeugnis hinterlassen, unterhalb eines Anteils von durchschnittlich 0,01 Masse-% Schwefel liegen, bezogen auf ein solches Erzeugnis. Erfindungsgemäß hat sich jedoch herausgestellt, dass bei solch geringen Anteilen an Schwefel ein Hydratationsschutz des Erzeugnisses durch diese Schwefelanteile nicht gegeben ist.

Gegenstand der Erfindung ist auch ein Verfahren zur Herstellung eines erfindungsgemäßen Erzeugnisses, umfassend die folgenden Merkmale: Zur Verfügungsstellung eines erfindungsgemäßen Versatzes;

Brennen des Versatzes zu einem feuerfesten keramischen Erzeugnis.

Das Brennen des Versatzes wird derart durchgeführt, dass Komponenten des Versatzes, insbesondere die Grundkomponente, miteinander versintern und hierdurch eine keramische Bindung ausbilden. Nach dem Brand liegt demnach ein gesintertes, also keramisches feuerfestes Erzeugnis vor.

Um den Schwefel der Schwefel umfassenden Komponente über das gesamte Volumen des Versatzes zu verteilen, kann insbesondere vorgesehen sein, dass der Versatz vor seinem Brand gemischt wird, insbesondere innig gemischt wird. Beispielsweise kann der Versatz in einem Zwangsmischer gemischt werden. Hierdurch kann erreicht werden, dass der Schwefel der Schwefel umfassenden Komponente über das gesamte Volumen des Versatzes und damit auch über das gesamte Volumen des aus dem Versatz hergestellten Erzeugnisses verteilt ist.

Der Versatz kann vor seinem Brand geformt werden, beispielsweise durch Pressen, oder auch ungeformt gebrannt werden, also als ungeformtes feuerfestes Erzeugnis beziehungsweise als sogenannte Masse verwendet werden.

Der Brand wird bei Temperaturen ausgeführt, bei denen Komponenten des Versatzes sintern. Beispielsweise kann das Brennen des Versatzes bei Temperaturen im Bereich von 1.400 bis 1.800°C, insbesondere bei etwa 1.480°C durchgeführt werden.

Der Brand kann beispielsweise für eine Dauer im Bereich von drei bis zwölf Stunden, insbesondere für etwa sechs Stunden durchgeführt werden.

Ferner wird der Brand derart, insbesondere bei solchen Temperaturen und für eine solche Dauer, durchgeführt, dass das aus dem Versatz gebrannte feuerfeste keramische Erzeugnis einen Anteil an Schwefel gemäß dem erfindungsgemäßen Erzeugnis aufweist.

Weitere Merkmale der Erfindung ergeben sich aus den Ansprüchen sowie dem nachfolgenden Ausführungsbeispiel der Erfindung.

Sämtliche Merkmale der Erfindung können, einzeln oder in Kombination, beliebig miteinander kombiniert sein.

Ein Ausführungsbeispiel der Erfindung wird nachfolgend näher erläutert.

Gemäß dem Ausführungsbeispiel wurde zunächst ein Versatz zur Verfügung gestellt, der die folgenden Komponenten in den folgenden Massenanteilen aufwies:
Eine Grundkomponente bestehend aus Sintermagnesia und
Magnesiaspinell: 70 Masse-%; und
eine Schwefel umfassende Komponente in Form einer gebrauchten Ausmauerung eines Zementdrehrohrofens: 30 Masse-%.

Bezogen auf die Gesamtmasse des Versatzes lag in der Grundkomponente die Sintermagnesia in einem Anteil von 59 Masse-% und der Magnesiaspinell in einem Anteil von 11 Masse-% vor. Die Grundkomponente lag vollständig in einer Korngröße bis maximal 5 mm vor. Die Sintermagnesia wies, bezogen auf die Gesamtmasse der Sintermagnesia, einen Anteil an MgO von 96,80 Masse-% und einen Anteil an weiteren Oxiden wie folgt auf: Al₂O₃: 0,04 Masse-%, SiO₂: 0,77 Masse-%; CaO: 2,21 Masse-%; Fe₂O₃: 0,18 Masse-%; Na₂O: 0,00 Masse-%; K₂O: 0,00 Masse-%; Schwefel (bestimmt als elementarer Schwefel nach Verfahren B gemäß DIN 51085: 2015-01): 0,00 Masse-%.

Der Magnesiaspinell wies, bezogen auf die Gesamtmasse des Magnesiaspinells, einen Anteil an MgO von 32,70 Masse-%, einen Anteil an Al₂O₃ von 66,73 Masse-% und einen Anteil an weiteren Oxiden wie folgt auf: SiO₂:0,08 Masse-%; CaO: 0,28 Masse-%; Fe₂O₃: 0,21 Masse%; Na₂O: 0,00 Masse-%; K₂O: 0,00 Masse-%; Schwefel (bestimmt als elementarer Schwefel nach Verfahren B gemäß DIN 51085: 2015-01): 0,00 Masse-%.

Die die Schwefel umfassende Komponente bildende, gebrauchte Ausmauerung eines Zementrehrohrofens lag in Form von auf eine Korngröße unter 5 mm gebrochenen Magnesia-Steinen vor. Bezogen auf die Gesamtmasse der Schwefel umfassenden Komponente, wies diese neben MgO in einem Anteil von 84,03 Masse-% und neben Schwefel (bestimmt als elementarer Schwefel nach Verfahren B gemäß DIN 51085: 2015-01) in einem Anteil von 0,57 Masse-%, einen Anteil an weiteren Oxiden wie folgt auf: Al₂O₃: 10,35 Masse-%, SiO₂:0,56 Masse-%; CaO: 2,50 Masse-%; Fe₂O₃: 0,75 Masse-%; Na₂O: 0,08 Masse-%; K₂O: 1,16 Masse-%.

Insgesamt ergab sich hieraus, bezogen auf die Gesamtmasse des Versatzes, folgende Zusammensetzung des Versatzes:

| | |
|---|---|
| MgO: | 85,92 Masse-% |
| Al₂O₃: | 10,47 Masse-% |
| SiO₂: | 0,63 Masse-% |
| CaO: | 2,09 Masse-% |
| Fe₂O₃: | 0,35 Masse-% |
| Na₂O: | 0,02 Masse-% |
| K₂O: | 0,35 Masse-% |
| S: | 0,17 Masse-% |

Der Versatz wurde mit einem Binder in Form von Ligninsulfonat in einem Anteil von 3,1 Masse-%, bezogen auf den Versatz ohne den Binder, versehen und anschließend in einem Zwangsmischer innig gemischt, so dass insbesondere der Schwefel der Schwefel umfassenden Komponente homogen über den Versatz verteilt war. Anschließend wurde der Versatz zu einem Grünkörper gepresst, getrocknet und schließlich bei einer Temperatur von 1.480°C für eine Dauer von sechs Stunden gebrannt, so dass die Komponenten des Versatzes miteinander versinterten. Während es Brandes verflüchtigte sich der Anteil an Schwefel des Ligninsulfonats vollständig, und der Anteil an Schwefel der übrigen Komponenten des Versatzes verflüchtigte sich um etwa 88 % von 0,17 Masse-% Schwefel im Versatz auf 0,02 Masse-% Schwefel im Erzeugnis. Nach Abkühlung lag ein feuerfestes keramisches Erzeugnis in Form eines erfindungsgemäßen feuerfesten keramischen Erzeugnisses vor. Die Zusammensetzung des Erzeugnisses war wie folgt:

| | |
|---|---|
| MgO: | 86,62 Masse-% |
| Al₂O₃: | 10,31 Masse-% |
| SiO₂: | 0,60 Masse-% |
| CaO: | 2,01 Masse-% |
| Fe₂O₃: | 0,38 Masse-% |
| Na₂O: | 0,03 Masse-% |
| K₂O: | 0,03 Masse-% |
| S: | 0,02 Masse-% |

Auf Grund der innigen Vermischung der Komponenten des Versatzes lag der Schwefel über das gesamte Volumen des Erzeugnisses verteilt in diesem vor. Hierdurch war ein sehr guter Hydratationsschutz des Erzeugnisses über sein gesamtes Volumen gegeben.

Zur quantitativen Bestimmung des Umfangs des Hydratationsschutzes durch den Schwefel im Erzeugnis wurde ein üblicher Angenottest durchgeführt, der regelmäßig zur Beurteilung der Hydratationsbeständigkeit von basischen feuerfesten keramischen Erzeugnissen angewandt wird. Bei einem Angenottest wird das Erzeugnis einer gesättigten Wasserdampfatmosphäre ausgesetzt und die Zeitdauer bis zur optisch wahrnehmbaren Zerstörung des Erzeugnisses bestimmt.

Im vorliegenden Fall wurde der Angenottest wie folgt durchgeführt:

Ein gemäß dem vorstehenden Ausführungsbeispiel hergestelltes Erzeugnis wurde in Form einer zylindrischen Probe mit einem Durchmesser und einer Höhe von jeweils 50 mm zur Verfügung gestellt. Diese Probe wurde in ein zylindrisches Gefäß eingesetzt, in dem ein auf 95°C aufgeheiztes Wasserbad ausgebildet war. Die Probe befand sich dabei auf einem oberhalb des Wasserbades angeordneten Metallrost. Das Gefäß wurde anschließend mit einem kegelförmigen Deckel, der eine kreisrunde Öffnung von etwa 2 cm Durchmesser aufwies, verschlossen. Hierdurch bildete sich um die Probe eine gesättigte Wasserdampfatmosphäre. Anschließend wurde die Zeitdauer bis zur optisch wahrnehmbaren Zerstörung der Probe gemessen.

Insoweit wurde die Dauer bis zur Zerstörung der Probe des erfindungsgemäßen Erzeugnisses auf 142 Stunden bestimmt.

Um die Hydratationsbeständigkeit des erfindungsgemäßen Erzeugnisses gemäß dem Ausführungsbeispiel mit einem feuerfesten keramischen Erzeugnis auf Basis MgO gemäß dem Stand der Technik zu vergleichen, wurde eine Vergleichsprobe aus einem solchen Erzeugnis gemäß dem Stand der Technik hergestellt und einem entsprechenden Angenottest unterworfen.

Das Erzeugnis gemäß dem Stand der Technik wurde aus einem Versatz hergestellt, der ausschließlich die vorbezeichnete Grundkomponente aufwies, und zwar mit einem Anteil von 83 Masse-% Sintermagnesia und 17 Masse-% Magnesiaspinell, bezogen auf die Gesamtmasse des Versatzes.

Insgesamt ergab sich hieraus, bezogen auf die Gesamtmasse des Versatzes, folgende Zusammensetzung dieses Versatzes gemäß dem Stand der Technik:

| | |
|---|---|
| MgO: | 86,8 Masse-% |
| Al₂O₃: | 10,5 Masse-% |
| SiO₂: | 0,8 Masse-% |
| CaO: | 1,7 Masse-% |
| Fe₂O₃: | 0,2 Masse-% |
| Na₂O: | 0,0 Masse-% |
| K₂O: | 0,0 Masse-% |
| S: | < 0,01 Masse-% |

Dieser Versatz wurde gemäß dem Ausführungsbeispiel der Erfindung, wie oben ausgeführt, weiter behandelt und zu einem feuerfesten keramischen Erzeugnis gesintert. Aus diesem Erzeugnis wurde eine Probe gewonnen, die in identischer Weise einem wie vorstehend ausgeführten Angenottest unterworfen wurde.

Dabei wurde die Dauer bis zur Zerstörung der Probe auf 39 Stunden bestimmt.

Durch die Erfindung konnte die Dauer bis zur Zerstörung des Erzeugnisses demnach mehr als verdreifacht werden.

## Patentansprüche

1. Feuerfestes keramisches Erzeugnis, umfassend die folgenden Merkmale:
Das Erzeugnis weist eine keramische Bindung auf;
das Erzeugnis weist einen Anteil an MgO von wenigstens 75 Masse-% auf;
das Erzeugnis weist einen Anteil an Schwefel im Bereich von 0,01 bis 0,20 Masse-% auf;
das Erzeugnis weist einen Anteil an SiO₂ unter 1,5 Masse-% auf.

2. Erzeugnis nach Anspruch 1 mit einem Anteil an Schwefel im Bereich von 0,01 bis 0,05 Masse-%.

3. Erzeugnis nach wenigstens einem der vorhergehenden Ansprüche, wobei das Erzeugnis einen Anteil an MgO im Bereich von 75 bis 97 Masse-% aufweist.

4. Erzeugnis nach wenigstens einem der vorhergehenden Ansprüche, wobei das Erzeugnis einen Anteil an Al₂O₃ im Bereich von 1 bis 20 Masse-% aufweist.

5. Erzeugnis nach wenigstens einem der vorhergehenden Ansprüche, wobei das Erzeugnis einen Anteil an CaO im Bereich von 0,5 bis 3,0 Masse-% aufweist.

6. Erzeugnis nach wenigstens einem der vorhergehenden Ansprüche, wobei das Erzeugnis einen Anteil an Fe₂O₃ unter 10 Masse-% aufweist.

7. Erzeugnis nach wenigstens einem der vorhergehenden Ansprüche, wobei das Erzeugnis einen Anteil an Na₂O unter 0,5 Masse-% aufweist.

8. Erzeugnis nach wenigstens einem der vorhergehenden Ansprüche, wobei das Erzeugnis einen Anteil an K₂O unter 0,2 Masse-% aufweist.

9. Erzeugnis nach wenigstens einem der vorhergehenden Ansprüche, wobei das Erzeugnis einen Anteil an der Gesamtmasse aus Na₂O und K₂O unter 0,5 Masse-% aufweist.

10. Verfahren zur Herstellung eines Erzeugnisses nach wenigstens einem der Ansprüche 1 bis 9, umfassend die folgenden Merkmale:
Zur Verfügungstellung eines Versatzes, umfassend die folgenden Merkmale:
Eine Grundkomponente umfassend einen oder mehrere Rohstoffe auf Basis Magnesia;
eine Schwefel umfassende Komponente umfassend einen oder mehrere Schwefel umfassende Rohstoffe;
der Versatz weist einen Anteil an MgO von wenigstens 75 Masse-% auf;
der Versatz weist einen solchen Anteil an Schwefel auf, dass ein aus dem Versatz brennbares feuerfestes keramisches Erzeugnis einen Anteil an Schwefel gemäß dem Erzeugnis nach Anspruch 1 aufweist;
Brennen des Versatzes zu einem feuerfesten keramischen Erzeugnis

## Claims

1. A refractory ceramic product comprising the following features:
the product has a ceramic bond;
the product has a proportion of MgO of at least 75 % by mass;
the product has a proportion of sulphur in the range from 0.01 to 0.20 % by mass;
the product has a proportion of SiO₂ below 1.5 % by mass.

2. The product according to claim 1 having a proportion of sulphur in the range from 0.01 to 0.05 % by mass.

3. The product according to at least one of the preceding claims, said product having a proportion of MgO in the range from 75 to 97 % by mass.

4. The product according to at least one of the preceding claims, said product having a proportion of Al₂O₃ in the range from 1 to 20 % by mass.

5. The product according to at least one of the preceding claims, said product having a proportion of CaO in the range from 0.5 to 3.0 % by mass.

6. The product according to at least one of the preceding claims, said product having a proportion of Fe₂O₃ below 10 % by mass.

7. The product according to at least one of the preceding claims, said product having a proportion of Na₂O below 0.5 % by mass.

8. The product according to at least one of the preceding claims, said product having a proportion of K₂O of less than 0.2 % by mass.

9. The product according to at least one of the preceding claims, said product having a proportion of the total mass of Na₂O and K₂O of less than 0.5 % by mass.

10. A method for the manufacture of a product according to at least one of claims 1 to 9, comprising the following features:
providing a batch, comprising the following features:
a basic component comprising one or more magnesia-based raw materials;
a component comprising sulphur comprising one or more raw materials comprising sulphur;
the batch has a proportion of MgO of at least 75 % by mass;
the batch has a proportion of sulphur such that a refractory ceramic product that can be fired from the batch having a proportion of sulphur in the range according to the product according to claim 1;
firing the batch to a refractory ceramic product.

## Revendications

1. Produit céramique réfractaire comprenant les caractéristiques suivantes :
le produit présente un liant céramique ;
le produit présente une fraction de MgO d'au moins 75% en masse ;
le produit présente une fraction de souffre dans la plage de 0,01 à 0,20% en masse ;
le produit présente une fraction de SiO₂ inférieure à 1,5% en masse.

2. Produit selon la revendication 1 avec une fraction de souffre dans la plage de 0,01 à 0,05% en masse.

3. Produit selon l'une au moins des revendications précédentes, dans lequel le produit présente une fraction de MgO dans la plage de 75 à 97% en masse.

4. Produit selon l'une au moins des revendications précédentes, dans lequel le produit présente une fraction d'Al₂O₃ dans la plage de 1 à 20% en masse.

5. Produit selon l'une au moins des revendications précédentes, dans lequel le produit présente une fraction de CaO dans la plage de 0,5 à 3,0% en masse.

6. Produit selon l'une au moins des revendications précédentes, dans lequel le produit présente une fraction de Fe₂O₃ inférieure à 10% en masse.

7. Produit selon l'une au moins des revendications précédentes, dans lequel le produit présente une fraction de Na₂O inférieure à 0,5% en masse.

8. Produit selon l'une au moins des revendications précédentes, dans lequel le produit présente une fraction de K₂O inférieure à 0,2% en masse.

9. Produit selon l'une au moins des revendications précédentes, dans lequel le produit présente une fraction de masse totale de Na₂O et K₂O inférieure à 0,5% en masse.

10. Procédé de fabrication d'un produit selon l'une au moins des revendications 1 à 9, comprenant les caractéristiques suivantes :
la fourniture d'une composition comprenant les caractéristiques suivantes :
un composant de base comprenant une ou plusieurs matières premières à base de magnésie ;
un composant comprenant du souffre, comprenant une ou plusieurs matières premières comprenant du souffre ;
la composition présente une fraction de MgO d'au moins 75% en masse ;
la composition présente une fraction de souffre telle, qu'un produit céramique réfractaire combustible à base de la composition présente une fraction de souffre conformément au produit selon la revendication 1 ;
la cuisson de la composition pour donner un produit céramique réfractaire.
